# EUROPÄISCHE PATENTSCHRIFT

(11) **EP 0 451 503 B1**
(45) Veröffentlichungstag und Bekanntmachung des Hinweises auf die Patenterteilung: **13.08.1997**
(21) Anmeldenummer: 91103392.6
(22) Anmeldetag: 06.03.1991
(51) Int. Cl.: C04B 28/14

(54) **Verfahren zum kontinuierlichen Herstellen von glasfaserverstärkten Gipsplatten und hiernach erhältliche Gipsplatten**
Process for the continous production of glass-fibre-reinforced gypsum panels and gypsum panels obtainable by the process
Procédé de fabrication en continu de plaques de platre renforcées de fibres de verre, et plaques de platre ainsi obtenables

(30) Priorität: 12.04.1990 DE 4011793
(43) Veröffentlichungstag der Anmeldung: 16.10.1991
(73) Patentinhaber: REDCO N.V., 1880 Kapelle op den Bos (BE)
(72) Erfinder:
(74) Vertreter: Hennicke, Albrecht, Dipl.-Ing.

(56) Entgegenhaltungen:
- EP-A- 0 490 160
- DE-A- 3 524 115
- DE-B- 1 033 123
- GB-A- 696 169
- GB-A- 1 437 040
- WORLD APTENT INDEX LATEST, Derwent Publications Ltd., LONDON, GB. Week 7627. &JP-A-51056824(Nitta Belt KK)15-05-1976

## Beschreibung

Die Erfindung betrifft ein Verfahren zum kontinuierlichen Herstellen von glasfaserverstärkten Gipsplatten und hiernach erhältliche Gipsplatten, die Gips, Glasfasern und/oder feste Füllstoffe enthalten, wobei der Gips, die Glasfasern und ggf. die Füllstoffe mit Wasser von abgemessener Menge kontinuierlich vermischt werden und dann die erzeugte Paste unter Vibrationen auf eine kontinuierlich bewegte Fläche gegossen und dort geformt, getrocknet und in die gewünschte Gestalt geschnitten wird.

Gipsplatten, die in großen Formaten mit einer Dicke von 5 mm bis 20 mm hergestellt werden, werden in erster Linie für den Innenausbau verwendet. Um ihre Biegezugfestigkeit zu erhöhen, ist es bekannt, die äußeren Schichten der Platten mit einer Bewehrung zu versehen, beispielsweise mit Karton, welcher einen Gipskern auf den Außenseiten abdeckt und mit dem Gips fest verbunden ist (Gipskartonplatte). Eine andere Art der Verstärkung wird bei Gipsplatten angewandt, die einen hohen Feuerwiderstand haben sollen. Hier bestehen die Gipsplatten aus mehreren Schichten, von denen die äußeren Plattenschichten Glasfaservliese enthalten (US-PS 3 993 822), während der Gipskern aus einer Mischung von Gips und Wasser besteht, dem auch kurze Glasfasern oder Mineralfasern (DE-AS 1 033 123) zugemischt sein können.

Es sind auch Leichtfasergipsplatten bekannt (DE-OS 2 728 581), bei denen eine aus Gips, kurzen Glasfaserstücken und Schaumbildner hergestellte, leichte Kernplatte auf allen Seiten von Fasermatten umschlossen wird, die in eine Form eingelegt werden, in die der Gipsbrei eingegossen wird. Die Fasermatten können gewebte oder gewirkte Stoffe, aber auch Vliesmaterialien aus synthetischen Fasern sein, welche der Platte erst die gewünschte Festigkeit verleihen, während ihr Gipskern zwar für die nötige Formstabilität sorgt, aber selbst nur eine geringe Bruchfestigkeit hat. Die verwendeten Materialien und der Aufbau der Platte verlangen eine komplizierte, kostenintensive Herstellung, die zu einem hohen Preis solcher Mantelplatten führt, der die Einsatzmöglichkeiten sehr begrenzt.

Es gibt auch andere, glasfaserverstärkte Gipsplatten, bei der Glasfasern unmittelbar unterhalb der Oberfläche der Platte konzentriert angeordnet sind (US-PS 4 195 110). Diese bekannte Platte ist in ihrer Herstellung sehr aufwendig, da sie aus separaten Gipsschichten von verschiedener Dichte gegossen werden muß.

Bei einer anderen Gipsplatte in Mehrschichtstruktur (DE-OS 27 17 276) enthält die Matrix aus kristallinem Gips zugleich Glasfasern und Asbestfasern und ist so aufgebaut, daß eine Kernschicht niedrigerer Dichte in jeweils eine Außenschicht höherer Dichte kontinuierlich übergeht. Ein solches Mehrschichterzeugnis ist sehr schwierig herzustellen, insbesondere ist es schwierig, die Dichte der einzelnen Schichten so zu steuern, daß sich die dichteren Schichten an den Außenseiten und die Schichten geringerer Dichte in der Mitte befinden. Außerdem muß bei der Herstellung mit Wasserüberschuß gearbeitet werden, der nach dem Gießen der Platte wieder abgesaugt werden muß. Außerdem ist es erforderlich, die Platte nach ihrem Gießen einem Preßvorgang zu unterwerfen, um eine innige Verbindung der einzelnen Gipsschichten zu erreichen.

Allen schichtweise aufgebauten, oberflächenbewehrten und glasfaserverstärkten Gipsplatten ist gemeinsam, daß ihre Schichten die Neigung haben, sich entweder schon während des Herstellungsprozesses oder später im Gebrauch voneinander zu trennen, da der Haft-Scherverbund in den Grenzflächen zwischen den einzelnen Schichten im allgemeinen geringer ist als im Inneren einer jeden Schicht.

Um diese Nachteile der sandwichartig aufgebauten Platten zu vermeiden, sind auch schon glasfaserverstärkte Gipsplatten bekannt, bei denen in die Gipsmasse 2 Vol.-% Glasfasern kurzer Länge als Bewehrung eingemischt sind (DD-Patent 139 614). Bei der Herstellung wird hierbei so vorgegangen, daß der Gips in ein Gemisch von Wasser, Schaummittel und Fasermaterial eingestreut wird, das vor der Bindemittelzugabe aufgeschäumt wurde. Durch das Aufschäumen soll erreicht werden, daß das fertige Erzeugnis eine Zellstruktur und hierdurch ein geringeres Gewicht aufweist und sich auch leichter verarbeiten, d.h. leichter sägen, nageln oder klammern läßt. Durch Einstreuen des Gipses in die aufgeschäumte Masse kann jedoch eine innige Vermischung von Gips und Glasfasern nicht erreicht werden, insbesondere auch deshalb nicht, weil die kurzgeschnittenen Glasfasern, die im folgenden als "Stapelfasern" bezeichnet werden, die Neigung haben, durch Adhäsionskräfte aneinander zu haften, so daß sich die einzelnen Glasfasern nicht in die Gipsmatrix einbetten und von dieser nicht allseits umschlossen werden. Insbesondere wenn nach dem bekannten Vorschlag Anhydrit verwendet wird, ist das fertige Erzeugnis inhomogen und weist sehr unterschiedliche Festigkeiten auf.

Bei der Herstellung einer ähnlich aufgebauten, faserverstärkten Gipsplatte (GB-PS 1 437 040) wird einer steifen Mischung aus Gipshalbhydrat und Wasser ein vorgefertigter Schaum zugegeben. In die so wieder verflüssigte Gipsmischung werden in einem folgenden Verfahrensschritt Glasfaserstücke kurzer Länge eingemischt. Trotz der dann folgenden Mischarbeit im Mischer werden die kurzen Glasfaserstücke in der Gipsmatrix nicht genügend fest eingebunden, so daß sie ihre Bewehrungsaufgabe nicht in der gewünschten Weise erfüllen können und die fertige Platte zwar eine verhältnismäßig geringe Dichte aufweist, aber auch nur eine geringe Bruchfestigkeit hat, die über 2,2 MN/m² nicht hinausgeht.

Zum kontinuierlichen Herstellen von glasfaserverstärkten Gipsplatten ist auch bereits vorgeschlagen worden, eine Mischung aus Glasfasern und einem wässrigen Gipsbrei aus einem Trichter in eine Form oder auf eine Fläche zu leiten, die sich unter der Trichteröffnung entlangbewegt (GB-PS 1 483 046).Damit der mit den Glasfasern durchsetzte Gipsbrei aus dem Trichter ausfließt und sich auf dem Formtisch verteilt, sind in der Trichterausflußöffnung Rüttelflaschen angeordnet, die von der Masse umströmt werden und diese in einer bestimmten Richtung in Vibrationen versetzen und hierbei gleichzeitig eine Ausrichtung der Glasfasern in der Masse bewirken. Durch die Vibrationen werden gleichzeitig in der Masse eingeschlossene Luft- und Gasblasen entfernt und es entsteht eine Gipsplatte von verhältnismäßig großer Festigkeit, die jedoch ihrer hohen Dichte wegen sehr schwer ist und sich nur mühsam bearbeiten läßt. Werden die Glasfasern beim Herstellungsprozeß in einer Richtung ausgerichtet, ist die Biegezugfestigkeit der Platten in verschiedenen Richtungen unterschiedlich groß.

Aufgabe der Erfindung ist es, ein Verfahren zum kontinuierlichen Herstellen von glasfaserverstärkten Gipsplatten anzugeben, das auf üblichen Gipsplatten-Fertigungsanlagen kontinuierlich durchgeführt werden kann und mit dem glasfaserverstärkte Gipsplatten hergestellt werden können, die bei homogener Zusammensetzung in jeder Richtung die annähernd gleiche, hohe Festigkeit haben, jedoch nur ein geringes Gesamtgewicht aufweisen und leicht bearbeitet werden können.

Diese Aufgaben werden mit den in den Ansprüchen angegebenen Merkmalen gelöst.

Eine nach dem in den Ansprüchen 1 oder 2 angegebenen Verfahren erhältliche glasfaserverstärkte Gipsplatte, die die gewünschten Eigenschaften hat, ist nach der Erfindung durch folgende Merkmale gekennzeichnet:
a) eine Gipsmatrix (CaSO₄ 2 H₂O), die aus Halbhydrat und Wasser hergestellt ist, deren Dichte mindestens 1,35 g/cm³ beträgt und mindestens 25% größer ist als die Dichte der fertigen Platte;
b) Glasfasern als Bewehrung, die einen Durchmesser von 5 - 20 µm und eine Länge von 2 - 20 mm haben und in einer Menge von 0,3 - 2,0 Gew.-% der fertigen Platte in dieser gleichmäßig verteilt sind;
c) eine Vielzahl von Hohlräumen, die in dem aus der Gipsmatrix und den Glasfasern bestehenden Festkörperskelett gleichmäßig verteilt sind und von denen jeder einzelne Hohlraum einen Durchmesser von 5 - 350 µm hat und die in ihrer Gesamtheit ein Volumen von min. 20 % der gesamten, fertigen Platte einnehmen.

Bei der Herstellung einer Gipsmatrix, die aus Halbhydrat und Wasser hergestellt ist und deren Dichte mindestens 1,35 g/cm³ beträgt, wird von einem Wasser/Gipsverhältnis zwischen 0,4 und 0,55 ausgegangen. Unter "Wasser/Gips-Verhältnis" wird im Folgenden das Gewichtsverhältnis der gesamten Flüssigkeit, also Wasser, Schaumwasser und gegebenenfalls Verflüssiger, zur gesamten Feststoffmenge verstanden, zu der neben Halbhydrat auch die Glasfasern und gegebenenfalls die weiter unten erwähnten riesel- oder schüttfähigen Füllstoffe gehören. Ein derartig niedriges Wasser/Gipsverhältnis führt zu einer Gipsmatrix von hoher Dichte und Endfestigkeit, da nach dem Abbinden und Trocknen des Gipses in der Matrix nur diejenigen Poren zurückbleiben, die durch Verdampfen des in der Matrix überschüssigen Wassers entstehen.

Ein Gipsbrei mit einem Wasser/Gipsverhältnis zwischen 0,4 und 0,55 kann zwar unter seinem Eigengewicht noch frei fließen, wenn aber nach der Erfindung Glasfasern als Stapelfasern mit einem Durchmesser von 5 bis 20 µm und einer Länge von 2 bis 20 mm in einer Menge von 0,3 bis 3,0 Gew.-% der fertigen Platte zugegeben werden, wird die Paste so dick, daß sie unter ihrem Eigengewicht nicht mehr fließt. Sie kann dann von einem Kreiselmischer nur noch mühsam verarbeitet werden, wie er in üblichen Gipsplatten-Fertigungsanlagen verwendet wird, denn durch die Erhöhung der Viskosität entstehen im Mischer so hohe Scherkräfte, daß die installierte Leistung des Mischers erheblich erhöht werden muß und außerdem ein Blockieren des Mischers zu befürchten ist.

Überraschenderweise gelingt es jedoch durch Unterziehen eines aus einem geeigneten Tensid separat erzeugten dicken Schaumes und/oder durch Zugabe von nicht-porösen und kein Wasser absorbierenden festen und hohlen Füllstoffen, deren Partikel nicht größer als 350 µm sind, die Viskosität der von Hause aus sehr steifen Mischung, in der die Glasfasern gut dispergiert sind, wieder soweit zu verringern, daß diese Mischung in den üblichen Kreiselmischern leicht verarbeitet werden kann. Bei Verwendung eines Mikroschaumes wird bei dieser Verarbeitung die Zellstruktur des Schaumes kaum verändert und in der Mischung entstehen Hohlräume, die einen Durchmesser von 5 - 350 µm haben. Die Gasbläschen des Schaumes wachsen also unter der Scherbeanspruchung des Mischers nicht zu großen, makroskopischen Luftblasen zusammen, die ein inhomogenes Erzeugnis von geringer mechanischer Festigkeit zur Folge haben würden, sondern die mikroskopischen Gasblasen verleihen, ebenso wie die kugelförmigen Festkörperpartikelchen der Paste, dem hieraus hergestellten Erzeugnis ein homogenes Gefüge mit gleichmäßig verteilten, mikroskopisch kleinen Hohlräumen.

Nach der Erfindung soll der Schaum eine Scheindichte von höchstens 0,12 g/cm³ haben. Die Paste fließt dann leicht und ohne Klumpen zu bilden aus dem Kreiselmischer aus. Sie hat hierbei einen viel besseren Zusammenhalt als ein Gipsbrei mit höherem Wasser/Gipsverhältnis. Auf der sich unter dem Mischerauslauf entlangbewegenden Oberfläche, beispielsweise einem laufenden Förderband, auf dem die herzustellenden Platten erhärten, geschnitten werden und trocknen, wird die Masse dann nach der Erfindung durch mechanische Mittel, beispielsweise durch Rüttler, einer Vibration unterworfen, so daß sie sich flach ausbreitet und größere Lufteinschlüsse ausgetrieben werden. Auch bei Zugabe eines dicken Schaumes in den Mischer werden bei dieser Vibration die im Schaum enthaltenen Mikro-Gasbläschen überraschenderweise nicht zerstört, sondern bilden Mikrozellen, die auch nach dem Abbinden des Gipses im Endprodukt verteilt vorhanden sind, welches dann zwar insgesamt eine poröse Struktur hat, aber eine dichte Matrix aufweist. Hierbei bildet diese Gipsmatrix, welche die einzelnen Stapel-Glasfasern fest umschließt und einbindet, ein überaus druck- und biegezugfestes Festkörperskelett, welches von den gleichmäßig verteilten Gasblasen durchsetzt ist, die von dem Schaum oder den hohlen Festkörperpartikeln gebildet werden.

Wenn ganz oder teilweise anstelle eines Schaumes leichte, nicht-poröse und nicht-wasseraufnehmende schütt- oder rieselfähige Füllstoffe zugegeben werden, sollen diese Kugelform haben und ihre Scheindichte soll nicht größer sein als 0,7 g/cm³. Die Größe der einzelnen Partikel soll < 350 µm sein, wobei bis zu 20 Gew.-% der fertigen Platte an leichten Füllstoffen zugefügt werden können. Diese Füllstoffe können beispielsweise hohle Glaskugeln oder aus Flugasche gewonnene, kugelförmige Festkörper (Cenospheres) sein. Verwendbar sind auch Kugeln aus synthetischen Kunststoffen.

Nach dem Formen, Abbinden und Trocknen hat das Endprodukt eine homogene Zusammensetzung und ist charakterisiert durch eine Bindemittelmatrix hoher Dichte sowie durch eine niedrige Scheindichte und eine hohe Festigkeit. Die Scheindichte liegt zwischen 0,6 g/cm³ und 1,08 g/cm³, während die Gipsmatrix eine Dichte von mindestens 1,35 g/cm³ hat und damit mindestens 25 % größer ist als die Scheindichte der Gesamtmischung.

Der als Ausgangsmaterial verwendete Gips, d.h. Kalziumsulfatbetahalbhydrat, soll möglichst rein sein, wie dies bei reinen Naturgipsen, Chemiegipsen oder REA-Gipsen der Fall ist. Die besten Ergebnisse werden mit Halbhydrat aus Gipsen erzielt, die in Rauchgasentschwefelungsanlagen anfallen (REA-Gips). Die verwendete Menge kann zwischen 80 bis 99,5 Gew.-% der gesamten Feststoffmenge betragen.

Als Glasfasern werden zweckmäßig Stapelfasern verwendet, die sich in Wasser in Einzelfasern zerteilen und eine Länge zwischen 2 und 20 mm, vorzugsweise eine Länge von 7 mm haben und in einer Menge von 0,3 bis 3,0 Gew.-%, zweckmäßig jedoch in einer Menge von 1,0 bis 2,0 Gew.-% des Gesamtgewichtes der Platte zugegeben werden.

Ferner ist es möglich, je nach Art des herzustellenden Produktes eine Vielzahl von Additiven hinzuzufügen, wie beispielsweise Polystyren-Kugeln, Mika, Ton, Flugasche, Vermikulite, andere bekannte Silikate und Aluminiumsilikate. Ferner können Verfahrenshilfen, wie Beschleuniger, Verzögerer und Verflüssiger bekannter Art eingesetzt werden.

Bei dem Verfahren zur Herstellung der Platten wird nach der Erfindung so vorgegangen, daß der Gips, die Fasern und gegebenenfalls die festen Füllstoffe miteinander vermischt und die sich hieraus ergebende Mischung in einen Kreiselmischer eingefüllt wird. Gleichzeitig wird die erforderliche Menge Wasser und separat erzeugter Schaum getrennt hinzugefügt und mit den Feststoffen vermischt. Die von dem Mischer gründlich durchgearbeitete Paste wird dann in eine unter dem Mischerauslauf entlangbewegte Form oder auf eine Förderfläche gegossen, die auf einer begrenzten Länge einer Vibration unterworfen wird, wobei die Paste auseinanderfließt und geformt wird. Die Masse bindet dann ab, wird zu den gewünschten Platten geschnitten und getrocknet.

Nach dem Abbinden und Trocknen entsteht eine mechanisch isotrope, glasfaserverstärkte Gipsplatte, in der die im wesentlichen aus Glasfasern und rehydriertem Gips bestehende Feststoffkomponente eine Dichte hat, die wesentlich größer ist als die Scheindichte des Gesamterzeugnisses.

Die durch den Schaum im Inneren der fertigen Platte vorhandenen Gasbläschen haben einen mittleren Durchmesser von ca. 50 µm. Sie nehmen in ihrer Gesamtheit ein Volumen von mindestens 20 % der gesamten, fertigen Platte ein.

Um eine gute, gleichmäßige und ungerichtete Verteilung der Glasfasern in der Gipsmatrix zu erreichen, werden diese mit dem Gips und gegebenenfalls den festen Füllstoffen zweckmäßig zunächst trocken vermischt und zusammen mit diesen in den Kreiselmischer aufgegeben. Es ist aber auch möglich, alle Feststoffe ungemischt in den Mischer einzuführen und hierbei gegebenenfalls durch Verwirbelung der Glasfasern für deren Auflockerung zu sorgen.

Im Folgenden werden zwei Beispiele der Erfindung angegeben:

### Beispiel C:

Ein Mischer vom Typ ERSHAM wurde mit 791 kg/h Halbhydrat, 14 kg/h gehackten Glasfasern von 7 mm Länge aus HTH 8144 Rovings, 325 l/h Wasser mit einer Beimischung von 0,2 % des wasserreduzierenden Wirkstoffs TAMOL NH sowie mit einem Schaum beschickt, der durch Aufschäumen von 50 l/h einer 1%-igen Lösung des Schaumbildners GYP2 mit Luft auf eine Scheindichte von 0,1 g/cm³ gebracht worden war. Die aus dem Mischer ausfließende Paste wurde durch Vibration zu einer Platte von 12,6 mm Dicke ausgebreitet. Die Dichte der Paste betrug 1,34 g/cm³, die Dichte der daraus gebildeten trockenen Platte betrug 1,01 g/cm³. Die Bruchfestigkeit der Platte betrug 10,5 N/mm².

Zusammensetzung der Platte: 98,5 Gew.-% Dihydrat, 1,5 Gew.-% Glasfasern.

Verhältnis von Wasser zu Feststoffen: 0,47

### Beispiel D:

Ein Mischer vom Typ ERSHAM wurde mit 1059 kg/h Halbhydrat, 31 kg/h gehackten Glasfasern von 13 mm Länge aus HTH 8144-Rovings, 320 kg/h einer aus Flugasche gewonnenen Hohlglasperlenfraktion (Cenospheres) und 690 l/h Wasser mit einer Beimischung von 0,2 % des den Wasseranspruch reduzierenden Wirkstoffs TAMOL NH beschickt. Die aus dem Mischer ausfließende Paste wurde durch Vibration zu einer Platte von 13,8 mm Dicke ausgebreitet. Die Dichte der Paste betrug 1,37 g/cm³, die Dichte der daraus gebildeten trockenen Platte betrug 1,01 g/cm³. Die Bruchfestigkeit der Platte belief sich auf 8,8 N/mm².

Zusammensetzung der Platte: 78,1 Gew.-% Dihydrat, 1,9 Gew.-% Glasfasern, 20 % Cenospheres

Verhältnis von Wasser zu Feststoffen: 0,49

Ein Vergleich der in den Beispielen C und D angegebenen Plattenzusammensetzungen mit anderen Plattenzusammensetzungen ist in der nachstehenden Tabelle wiedergegeben:

| Plattenzusammensetzung (in Gew.-%) | | | | | | | | Eigenschaften | |
|---|---|---|---|---|---|---|---|---|---|
| Beispiel: | Gips | Glasfasern 7mm 13mm | | Schaum | feste Füllstoffe* | Verflüssiger | Wasser/Gips-**Verhältnis | Scheindichte g/cm³ | Bruchfestigkeit N/mm² |
| A | 98,5 | - | 1,5 | - | - | 0,2 | 0,45 | 1,30 | 11,6 |
| B | 98,5 | 1,5 | - | - | - | 0,2 | 0,49 | 1,26 | 12,7 |
| C | 98,5 | 1,5 | - | + | - | 0,2 | 0,47 | 1,01 | 10,5 |
| D | 78,1 | - | 1,9 | - | 20 | 0,2 | 0,49 | 1,01 | 8,8 |
| E | 98,5 | 1,5 | - | - | - | 0,2 | 0,75 | 1,02 | 5,0 |
| F | 98,5 | 1,5 | - | - | - | 0,2 | 0,85 | 0,95 | 3,2 |

| | | | | | | | | | |
|---|---|---|---|---|---|---|---|---|---|
| * (Cenospheres) | | | | | | | | | |
| ** Verhlältnis von Wasser und Schaum zu Halbhydrat und ggfls. Füllstoffen | | | | | | | | | |

Man erkennt, daß bei den erfindungsgemäßen Zusammensetzungen C und D bei einer verhältnismäßig niedrigen Scheindichte von 1,01 g/cm³ sich Bruchfestigkeiten von 10,5 bzw. 8,8 N/mm² ergeben, während bei einem etwa gleich hohen Wasser/Gipsverhältnis und einer gleichen Menge an Glasfasern, aber ohne Zugabe von Schaum oder kugeligen Feststoffen nur eine geringfügig höhere Bruchfestigkeit, aber auch eine wesentlich höhere Scheindichte erzeugt wird. Bei einem höheren Wasser/Gipsverhältnis als bei der Erfindung lassen sich zwar ebenso geringe oder kleinere Scheindichten erzeugen, die Bruchfestigkeit geht jedoch auf weniger als die Hälfte zurück. Das gewünschte Optimum ist deshalb nur mit der erfindungsgemäßen Zusammensetzung zu erreichen.

## Patentansprüche

1. Verfahren zum kontinuierlichen Herstellen von glasfaserverstärkten Gipsplatten, die Gips, Glasfasern und/oder feste Füllstoffe enthalten, wobei der Gips, die Glasfasern und gegebenenfalls die Füllstoffe mit Wasser von abgemessener Menge kontinuierlich vermischt werden und dann die erzeugte Paste unter Vibrationen auf eine kontinuierlich bewegte Fläche gegossen und dort geformt, getrocknet und in die gewünschte Gestalt geschnitten wird, **dadurch gekennzeichnet, daß** Halbhydrat-Gips und kurze Glasfaserstücke in einem Kreiselmischer mit einem Verflüssiger und nur so viel Wasser kontinuierlich vermischt werden, daß das Gewichtsverhältnis von Wasser/Gips 0,6 nicht überschreitet und daß bei Mischen ein separat erzeugter Schaum mit einer Scheindichte von höchstens 0,12 g/cm³ in einer solchen Menge zugegeben wird, daß die Scheindichte der gesamten Platte mindestens 20% kleiner ist als die Dichte der aus Gips bestehenden Matrix und daß die auf die kontinuierlich bewegte Fläche gegossene Paste beim Ausbreiten und Formen einer Vibration unterworfen wird.

2. Verfahren nach Anspruch 1, **dadurch gekennzeichnet, daß** der beim Mischen zugegebene Schaum vollständig oder teilweise durch leichte, nicht-poröse und kein Wasser aufnehmende schütt- oder rieselfähige Füllstoffe ersetzt wird, deren Scheindichte nicht größer ist als 0,7 g/cm³ und die eine Partikelgröße von < 350 µm haben.

3. Glasfaserverstärkte Gipsplatte erhältlich nach dem Verfahren nach Anspruch 1 oder 2, **gekennzeichnet durch** :
a) eine Gipsmatrix, die aus Halbhydrat und Wasser hergestellt ist, deren Dichte mindestens 1,35 g/cm³ beträgt und mindestens 25% größer ist als die Dichte der fertigen Platte;
b) Glasfasern als Bewehrung, die einen Durchmesser von 5 - 20 µm und eine Länge von 2 - 20 mm haben und in einer Menge von 0,3 - 2,0 Gew.-% der fertigen Platte in dieser gleichmäßig verteilt sind;
c) eine Vielzahl von Hohlräumen, die in dem aus der Gipsmatrix und den Glasfasern bestehenden Festkörperskelett gleichmäßig verteilt sind und von denen jeder einzelne Hohlraum einen Durchmesser von 5 - 350 µm hat und die in ihrer Gesamtheit ein Volumen von min. 20% der gesamten fertigen Platte einnehmen.

4. Gipsplatte nach Anspruch 3, **dadurch gekennzeichnet, daß** die Glasfasern einen Durchmesser von 8 - 15 µm haben.

5. Gipsplatte nach Anspruch 3 oder 4, **dadurch gekennzeichnet, daß** die Glasfasern eine Länge von 3 - 18 mm haben.

6. Gipsplatte nach einem der Ansprüche 3 bis 5, **dadurch gekennzeichnet, daß** die Glasfasern eine Länge von 7 mm haben.

7. Gipsplatte nach einem der Ansprüche 3 bis 6, **dadurch gekennzeichnet, daß** die Glasfasern in einer Menge von 1,0 - 2,0 % des Gesamtgewichtes der Platte in der Gipsmatrix verteilt angeordnet sind.

8. Gipsplatte nach einem der Ansprüche 3 bis 7, **dadurch gekennzeichnet, daß** die Hohlräume mindestens teilweise von kleinen Gasbläschen gebildet werden, die einen mittleren Durchmesser von ca. 50 µm haben.

9. Gipsplatte nach einem der Ansprüche 3 bis 8, **dadurch gekennzeichnet, daß** die Gasbläschen von einem schaumbildenden Stoff umgeben sind.

10. Gipsplatte nach einem der Ansprüche 3 bis 9, **dadurch gekennzeichnet, daß** der schaumbildende Stoff ein Tensid ist.

11. Gipsplatte nach einem der Ansprüche 3 bis 10, **dadurch gekennzeichnet, daß** der schaumbildende Stoff ein Polyvinylalkohol ist.

12. Gipsplatte nach einem der Ansprüche 3 bis 11, **dadurch gekennzeichnet, daß** die Hohlräume mindestens teilweise in kleinen Partikeln von nicht-porösen und kein Wasser absorbierenden festen Füllstoffen enthalten sind, die einen größten Partikeldurchmesser von ≤ 350 µm haben.

13. Gipsplatte nach einem der Ansprüche 3 bis 12, **dadurch gekennzeichnet, daß** die Füllstoffpartikel Kugelgestalt haben und aus Glas oder synthetischem Kunststoff bestehen.

14. Gipsplatte nach einem der Ansprüche 3 bis 13, **dadurch gekennzeichnet, daß** die Füllstoffpartikel aus Flugasche oder daraus gewonnenen Hohlkörpern bestehen.

## Claims

1. Process for continuous manufacture of fibreglass reinforced gypsum boards which contain gypsum, glass fibres and/or solid filler materials, and in which the gypsum, the glass fibres and, if appropriate, the filler materials are continuously mixed with a measured volume of water and the produced paste is poured under vibration onto a continuously moved surface where it is formed, dried and cut into a desired shape, **characterised in that** semi-hydrate gypsum and short fibreglass pieces are continuously mixed in a rotary mixer with a liquefier and only so much water that the weight ratio of water/gypsum does not exceed 0.6, and during mixing a separately produced foam is added with an apparent density of maximum 0.12 g/cm³ at such quantity that the apparent density of the entire board is at least 20% smaller than the density of the gypsum matrix, and the paste which is poured onto the continuously moved surface is subjected to a vibration whilst spreading and forming.

2. Process according to Claim 1, **characterised in that** the foam which is added during mixing is completely or partially replaced by lightweight, non-porous and water-repellent pourable or free-flowing filler materials, the apparent density of which does not exceed 0.7 g/cm³ and which have a particle size of < 350 µm.

3. Fibreglass reinforced gypsum board obtainable according to the process of Claim 1 or 2, **characterised by:**
a) a gypsum matrix produced from semi-hydrate and water with a density of minimum 1.35 g/cm³ and at least 25% larger than the density of the finished board;
b) glass fibres as reinforcement, with a diameter between 5 and 20 µm and a length between 2 and 20 mm and evenly distributed therein at a quantity between 0.3 and 2.0 %-by-weight of the finished board;
c) a plurality of cavities, which are evenly distributed in the solid body frame composed of gypsum matrix and glass fibres and of which each individual cavity has a diameter between 5 and 350 µm and which in their entirety take up a volume of at least 20% of the entire finished board.

4. Gypsum board according to Claim 3, **characterised in that** the glass fibres have a diameter between 8 and 15 µm.

5. Gypsum board according to Claim 3 or 4, **characterised in that** the glass fibres have a length between 3 and 18 mm.

6. Gypsum board according to one of Claims 3 to 5, **characterised in that** the glass fibres have a length of 7 mm.

7. Gypsum board according to one of Claims 3 to 6, **characterised in that** the glass fibres are spaced in the gypsum matrix at a quantity of between 1.0 and 2.0 % of the total weight of the board.

8. Gypsum board according to one of Claims 3 to 7, **characterised in that** the cavities are at least partially formed by small gas bubbles with a mean diameter of approximately 50 µm.

9. Gypsum board according to one of Claims 3 to 8, **characterised in that** the gas bubbles are encapsulated by a foam-forming material.

10. Gypsum board according to one of Claims 3 to 9, **characterised in that** the foam forming material is a tenside.

11. Gypsum board according to one of Claims 3 to 10, **characterised in that** the foam forming material is a polyvinyl alcohol.

12. Gypsum board according to one of Claims 3 to 11, **characterised in that** the cavities are at least partially contained in small particles of non-porous and no water absorbing solid filler materials with a maximum particle diameter of ≤ 350.

13. Gypsum board according to one of Claims 3 to 12, **characterised in that** the filler material particles are ballshaped and made of glass or synthetic plastic material.

14. Gypsum board according to one of Claims 3 to 13, **characterised in that** the filler material particles are composed of flue ashes of hollow bodies made thereof.

## Revendications

1. Procédé pour la fabrication continue de panneaux de plâtre renforcés à la fibre de verre et comportant du plâtre, des fibres de verre et/ou des matières de remplissage solides, le plâtre, les fibres de verre et le cas échéant, les matières de remplissage étant mélangées de manière continue avec une quantité d'eau déterminée et la pâte obtenue étant ensuite versée, sous l'effet de vibrations, sur une surface agitée en permanence, et y étant ensuite moulée, séchée et découpée dans la forme souhaitée, caractérisé en ce que le plâtre semi-hydraté et les petits éléments de fibre de verre sont mélangés de manière continue dans un mélangeur centrifuge avec un fluidifiant et seulement une quantité d'eau telle que le rapport en poids eau/plâtre ne dépasse pas 0,6, en ce que lors du mélange, une mousse obtenue séparément et présentant une densité apparente de 0,12 g/cm3 maximum est ajoutée dans une quantité telle que la densité apparente de tout le panneau soit au moins 20 % inférieure à la densité de la matrice en plâtre et en ce que la pâte versée sur la surface agitée en permanence est soumise à une vibration lors de l'étalement et du moulage.

2. Procédé selon la revendication 1, caractérisé en ce que la mousse ajoutée lors du mélange est intégralement ou en partie remplacée par des matières de remplissage légères, non poreuses, n'adsorbant pas d'eau, déversables ou coulables et dont la densité apparente n'est pas supérieure à 0,7 g/cm3 et qui ont une granulométrie inférieure à 350 µm.

3. Panneau de plâtre renforcé à la fibre de verre pouvant être obtenu par le procédé selon la revendication 1 ou la revendication 2, caractérisé par :
a) une matrice en plâtre qui est fabriquée à base de semi-hydrate et d'eau, dont la densité est au moins de 1,35 g/cm3 et au moins 25 % supérieure à la densité du panneau fini ;
b) des fibres de verre en tant qu'armature qui ont un diamètre de 5 à 20 µm et une longueur de 2 à 20 mm et sont réparties régulièrement dans le panneau fini, dans une quantité de 0,3 à 2,0 % en poids du panneau fini ;
c) de multiples vides qui sont répartis régulièrement dans la structure solide composée de la matrice en plâtre et des fibres de verre, qui ont chacun individuellement un diamètre de 5 à 350 µm et qui occupent dans leur totalité, un volume de 20 % minimum du panneau total fini.

4. Panneau en plâtre selon la revendication 3, caractérisé en ce que les fibres de verre ont un diamètre de 8 à 15 µm.

5. Panneau en plâtre selon la revendication 3 ou la revendication 4, caractérisé en ce que les fibres de verre ont une longueur de 3 à 18 mm.

6. Panneau en plâtre selon l'une des revendications 3 à 5, caractérisé en ce que les fibres de verre ont une longueur de 7 mm.

7. Panneau en plâtre selon l'une des revendications 3 à 6, caractérisé en ce que les fibres de verre sont réparties dans la matrice en plâtre dans une quantité de 1,0 à 2,0 % du poids total du panneau.

8. Panneau en plâtre selon l'une des revendications 3 à 7, caractérisé en ce que les vides sont formés au moins en partie de petites bulles de gaz qui ont un diamètre moyen de 50 µm environ.

9. Panneau en plâtre selon l'une des revendications 3 à 8, caractérisé en ce que les petites bulles de gaz sont entourées par une matière moussante.

10. Panneau en plâtre selon l'une des revendications 3 à 9, caractérisé en ce que la matière moussante est un agent tensioactif.

11. Panneau en plâtre selon l'une des revendications 3 à 10, caractérisé en ce que la matière moussante est un alcool polyvinylique.

12. Panneau en plâtre selon l'une des revendications 3 à 11, caractérisé en ce que les vides sont contenus au moins en partie dans des petites particules des matières de remplissage solides non poreuses, n'absorbant pas d'eau, dont la granulométrie ne dépasse pas 350 µm.

13. Panneau en plâtre selon l'une des revendications 3 à 12, caractérisé en ce que les particules des matières de remplissage ont la forme de billes et sont en verre ou en matière plastique synthétique.

14. Panneau en plâtre selon l'une des revendications 3 à 13, caractérisé en ce que les particules des matières de remplissage se composent de cendres volantes ou de corps creux qui en sont extraits.
